# EUROPEAN PATENT APPLICATION

(11) **EP 3 730 687 A1**
(43) Date of publication of application: **28.10.2020**
(21) Application number: 18890538.4
(22) Date of filing: 19.12.2018
(51) Int. Cl.: D06F 33/02, D06F 37/40

(54) **APPARATUS FOR TREATING CLOTHES**

(30) Priority: 22.12.2017 KR 20170177791
(71) Applicant: LG Electronics Inc., Yeongdeungpo-gu Seoul 07336 (KR)
(72) Inventor: KIM, Keunjoo, Seoul 06772 (KR)
(74) Representative: Ter Meer Steinmeister & Partner
(86) International application number: PCT/KR2018/016211
(87) International publication number: WO 2019/124960

(57) **Abstract**

The present invention relates to an apparatus for treating clothes, comprising: a cabinet forming an exterior; a tub, provided within the cabinet and having an inlet at an upper portion thereof, for storing water; a drum, rotatably provided within the tub and having a through hole on the bottom surface thereof, for receiving clothes; an agitating unit, rotatably provided in the through hole, for agitating the clothes; a driving unit, provided below the agitating unit, for providing power for rotating at least any one of the agitating unit and the drum; and an elevating unit which is provided between the bottom surface of the drum and the tub, is attached to the drum so as to prevent rotation of the drum when the water level of the tub is equal to or higher than a first water level, and is separated from the drum so as to enable rotation of the drum when the water level of the tub is equal to or lower than the first water level.

## Description

### Technical Field

The present invention relates generally to an apparatus for treating clothes. More particularly, the present invention relates to an apparatus for treating clothes, wherein the apparatus includes an agitator configured to be rotated independently of or in conjunction with the rotation of a drum, and it is determined whether to rotate a drum according to a water level thereby preventing entanglement and damage of clothes.

### Background Art

In general, a clothes treating apparatus refers to an apparatus capable of performing washing, drying, or either washing or drying of clothes. Here, the clothes treating apparatus may perform only the washing or drying function, or may perform both the washing and drying functions. In recent years, washing machines equipped with a steam supply device to have a refresh function such as removing wrinkles, odors, static electricity from clothes have become popularized.

According to the direction in which clothes are loaded, related art clothes treating apparatuses may be categorized into a front-load type and a top-load type. On the other hand, according to the washing method, the related art clothes treating apparatuses may be categorized into a vertical type in which a pulsator or a washing tub is rotated, and a horizontal type in which a drum is rotated.

A typical example of this horizontal type is a drum washing machine or drum drying machine.

Hereinafter, a front-load type clothes treating apparatus is defined as a clothes treatment apparatus configured such that an opening is provided at a front and a rotary shaft of a drum is parallel to the ground or has a predetermined slope, and a top-load type clothes treating apparatus is defined as a clothes treating apparatus configured such that an opening is provided at a top and a rotary shaft of a drum is perpendicular to the ground.

It is a recent trend that such the clothes treating apparatuses are gradually enlarged in response to user's demands. That is, the exterior size of the washing machines for home use has gradually increased.

In general, one large-capacity clothes treating apparatus is installed in each house. Accordingly, when laundry is to be sorted by type and washed separately, the clothes treating apparatus is used several times. For example, when laundry such as adult clothes and laundry such as underwear or baby clothes are needed to washed separately, the clothes treating machine may be used for washing of the latter laundry after washing of the former laundry is completed.

This results a problem in that the washing time may increase, and further the energy consumption may increase. Further, using a related art large-sized clothes treating apparatus in washing a small amount of laundry may not be preferable in terms of energy saving.

This is because a washing course of the large-sized clothes treating apparatus is generally preset on the basis of a large amount of laundry, and thus consumes a large amount of water. It is also because a large-sized drum or inner tub needs to be rotated, which consumes a lot of power.

Additionally, since the washing course is preset on the basis of a large amount of laundry, a relatively long washing time is required.

Further, the large-sized clothes treating apparatus may not be suitable for washing delicate fabrics such as underwear or baby clothes because laundry courses are mainly provided for general clothes. Furthermore, the large-sized clothes treating apparatus is not suitable even for a case where a small amount of laundry needs to be washed frequently.

Consumers generally collect laundry over several days or a longer period to wash the collected laundry at once. However, it is not good in terms of cleanliness to leave underwear and baby clothes unwashed for a long time. When the laundry is left unwashed for a long time, dirt may adhere to the laundry and thus the laundry may not be washed thoroughly.

For this reason, there is a need for a small-sized clothes treating apparatus having a much smaller capacity than the related art large-sized clothes treating apparatus.

However, it is not preferable in terms of space utilization and aesthetics to install two washing machines side by side in one house, even in the case of the small-sized clothes treating apparatus.

In recent years, in an effort to solve the above problems, a top-load type clothes treating apparatus that may be provided as an auxiliary apparatus on a front-load type clothes treating apparatus or may be provided independently has been proposed.

The top-load type clothes treating apparatus may be provided on or under the front-load type clothes treating apparatus as needed, and thus it is possible to wash a small amount of laundry while not only promoting space utilization, but also saving water or energy and washing a small amount of laundry at any time.

Meanwhile, the top-load type clothes treating apparatus may include a drum rotated with clothes accommodated therein, and an agitator (pulsator) provided at a bottom wall of the drum to improve washing performance.

Either one of the drum and the agitator rotates, or both the drum and the agitator rotate in the same or in the opposite direction to apply strong physical force to clothes, thereby improving washing performance.

However, the top-load type clothes treating apparatus used as an auxiliary clothes treating apparatus has a relatively low height, and thus the volume ratio between water and clothes is not significantly high.

Therefore, when the agitator is rotated, clothes accommodated in the drum rub against or come in to contact with the drum, and thus the drum may be unintentionally rotated in the same direction as the agitator.

That is, the drum may be rotated in conjunction with the rotation of the agitator, resulting that a sufficient physical force may not be transmitted to the clothes, or a suitable water current may not be transmitted to the clothes, causing a problem in that entanglement of the clothes may be increased. Such a phenomenon in which clothes are entangled may cause a problem of not only damage to the clothes, but also an increase in eccentricity of the drum. Furthermore, the clothes may be seriously entangled in a spin-dry cycle, resulting in a problem of increased damage to the clothes.

Moreover, when the clothes are entangled even in a wash cycle, detergents may not be supplied to the entire clothes, or dirt on the clothes may not be removed, resulting in a problem of a deterioration in washing performance.

Meanwhile, when the drum is continuously fixed, there is a problem that spin-drying of the clothes cannot be performed. Therefore, it is conceivable that a configuration such as a clutch or a brake which actively controls fixing or rotating the drum is employed.

However, since the top-load type clothes treating apparatus can be used as an auxiliary clothes treating apparatus, the height thereof is inevitably limited. Therefore, the height of the clothes treating apparatus may be increased with the installation of the configuration of the clutch or the brake, resulting in a problem of hindering user accessibility or reducing the washing capacity of the clothes treating apparatus.

### Disclosure

### Technical Problem

Accordingly, the present invention has been made keeping in mind the above problems occurring in the related art, and an objective of the present invention is to provide an apparatus for treating clothes, wherein a drum is prevented from rotating arbitrarily when an agitator is rotated in a state in which water is accommodated in a tub, thereby preventing clothes from being entangled or damaged.

Another objective of the present invention is to provide an apparatus for treating clothes, wherein an agitator and a drum are rotated in conjunction with each other when water of a tub is equal to or less than a predetermined level, thereby preventing clothes from being entangled or damaged.

Still another objective of the present invention is to provide an apparatus for treating clothes, wherein in a top-load type clothes treating apparatus, a drum is fixed even when an agitator is rotated in a wash cycle.

Still another objective of the present invention is to provide an apparatus for treating clothes, wherein in a top-load type clothes treating apparatus, a drum is rotated in conjunction with the rotation of an agitator when the agitator is rotated in a spin-dry cycle.

Still another objective of the present invention is to provide an apparatus for treating clothes, wherein it is determined whether to fix or rotate a drum according to a water level of a tub, thereby omitting the configuration of a clutch or a brake.

### Technical Solution

In order to accomplish the above objectives, the present invention provides an apparatus for treating clothes, the apparatus including: a cabinet defining an exterior; a tub provided inside the cabinet, having an upper portion with an access opening, and configured to accommodate water; a drum rotatably provided inside the tub, having a bottom skirt with an opening, and configured to accommodate clothes; an agitator rotatably provided in the opening of the bottom skirt and configured to agitate the clothes; a driving part provided below the agitator and configured to provide power to rotate at least one of the agitator and the drum; and a float provided between the bottom skirt of the drum and the tub, and configured to be attached to the drum to prevent rotation of the drum when a water level of the tub is equal to or greater than a first water level, and separated from the drum to allow the drum to be rotatable when the water level of the tub is equal to or less than the first water level.

The driving part may include: a stator fixed to the tub and configured to form a rotating magnetic field; a rotor configured to be rotated by the rotating magnetic field; a rotary shaft passing through the tub and configured to be rotated by the rotor; and a shaft receiver rotatably receiving at least a portion of the rotary shaft and coupled to the bottom skirt of the drum, wherein the agitator may be coupled to an end of the rotary shaft so that the agitator may be rotated in conjunction with rotation of the rotary shaft even when the float is attached to the drum.

The drum may include a shaft holder coupled to an inner circumferential surface of the opening of the bottom skirt and to which the shaft receiver is coupled to a lower portion thereof; and the float may be configured to be attached to the shaft holder when the water level of the tub is equal to or greater than the first water level, and separated from the shaft holder when the water level of the tub is equal to or less than the first water level.

The float may include: a floating body configured to be raised by buoyancy along a longitudinal direction of the rotary shaft; and a locking body provided on an inner circumferential surface of the floating body, through which the shaft receiver passes, and configured to be attachable to the lower portion of the shaft holder.

The shaft holder may include: a hub to which the shaft receiver is coupled; and fixing arms extending radially from the hub and coupled to the bottom skirt of the drum, wherein the locking body may be configured to come into contact with the hub.

The apparatus may further include a rotation prevention part provided on at least one of the agitator, the hub, and a bottom wall of the tub and configured to prevent rotation of the agitator.

The rotation prevention part may include: a plurality of ridges and grooves provided along a circumference of the locking body; and a coupling part protruding from a lower portion of the hub so as to have a diameter or shape corresponding to the ridges and grooves and configured to come into contact with either one of outer and inner circumferential surfaces of the ridges and grooves.

The rotation prevention part may further include a seat part provided on the bottom wall of the tub to protrude corresponding to the ridges and grooves, and configured to come into contact with either one of the outer and inner circumferential surfaces of the ridges and grooves.

The coupling part may be configured to come into contact with either one of the outer and inner circumferential surfaces of the ridges and grooves, and the seat part may be configured to come into contact with a remaining one of the outer and inner circumferential surfaces of the ridges and grooves.

The ridges and grooves may be configured to immediately come into contact with the coupling part when the ridges and grooves are spaced apart from the seat part, and immediately come into contact with the seat part when the ridges and grooves are spaced apart from the coupling part.

The rotation prevention part may include: at least one of at least one protrusion protruding from either one of the float and the lower surface of the hub; an insertion hole formed at a remaining one of the float and the lower surface of the hub to allow the at least one protrusion to be inserted thereinto; and a contact part protruding from a lower portion of the float and configured to come into contact with the bottom wall of the tub.

The apparatus may further include a coupling provided between the agitator and the driving part, and configured to be coupled to the shaft holder to transmit power to the drum when the water level of the tub is equal to or less than a second water level, and separated from the shaft holder to block transmission of the power to the drum when the water level of the tub is equal to or greater than the second water level.

The rotary shaft may include: a shaft body connected to the rotor; and a shaft gear part extending from the shaft body and having a first gear provided on an outer circumferential surface of a portion that protrudes from the hub, wherein the shaft holder may further include a shaft through part extending from an upper portion of the hub, receiving at least a portion of the shaft gear part, provided at a predetermined distance apart from the shaft gear part, and having a second gear provided on an inner circumferential surface thereof; and the coupling may include: a coupling gear having an inner circumferential surface provided with a third gear that is configured to be meshed with the first gear and moved along the longitudinal direction of the shaft gear part, and an outer circumferential surface provided with a fourth gear that is configured to be meshed with the second gear when inserted between the shaft gear part and the hub gear; and a moving part extending from an upper surface or outer circumferential surface of the coupling gear so that the hub gear is detachably received therein, and configured to raise the coupling gear.

The coupling may further include a floating disk provided below the moving part, and configured to be raised in conjunction with raising of the float to raise the moving part.

The floating disk may include at least one support part having a larger diameter than the moving part, provided at a lower portion thereof, and configured to come into contact with the float; the shaft holder may further include a support part through-hole provided through the hub and allowing the support part to be inserted thereinto; and the float may further include a pressing part inserted into the support part through-hole and configured to press the support part.

The apparatus may further include a buoyancy controller configured to move water or air of the tub toward below the float, in communication with one side of the tub and the bottom wall of the tub.

### Advantageous Effects

The present invention has an effect of providing an apparatus for treating clothes, wherein a drum is prevented from rotating arbitrarily when an agitator is rotated in a state in which water is accommodated in a tub, thereby preventing clothes from being entangled or damaged.

The present invention has another effect of providing an apparatus for treating clothes, wherein an agitator and a drum are rotated in conjunction with each other when water of a tub is equal to or less than a predetermined level, thereby preventing clothes from being entangled or damaged.

The present invention has still another effect of providing an apparatus for treating clothes, wherein in a top-load type clothes treating apparatus, a drum is fixed even when an agitator is rotated in a wash cycle.

The present invention has still another effect of providing an apparatus for treating clothes, wherein in a top-load type clothes treating apparatus, a drum is rotated in conjunction with the rotation of an agitator when the agitator is rotated in a spin-dry cycle.

The present invention has still another effect of providing an apparatus for treating clothes, wherein it is determined whether to fix or rotate a drum according to a water level of a tub, thereby omitting the configuration of a clutch or a brake.

### Description of Drawings

FIGS. 1 and 2 are views illustrating an exterior of an apparatus for treating clothes according to the present invention.
FIG. 2 is a view illustrating an internal structure of the apparatus for treating clothes according to the present invention.
FIG. 3 is a view illustrating an embodiment of a drum, an agitator, and a driving part of the apparatus for treating clothes according to the present invention.
FIG. 4 is a view illustrating a structure of a coupling according to the present invention.
FIG. 5 is a view illustrating an aspect that the coupling according to the present invention is raised and lowered according to a water level.
FIG. 6 is a view illustrating a float of the apparatus for treating clothes according to the present invention.
FIG. 7 is a view illustrating a structure of the float according to the present invention.
FIG. 8 is a view illustrating an aspect that the float according to the present invention is raised and lowered according to a water level.
FIG. 9 is a view illustrating another embodiment of a float according to the present invention.
FIG. 10 is a view illustrating another embodiment of a coupling and a float according to the present invention.
FIG. 11 is a view illustrating an aspect that the coupling and the float are raised according to the water level in the other embodiment.
FIG. 12 is a view illustrating an embodiment that can reduce the volume and weight of the float and the coupling according to the present invention.
FIG. 13 is a view illustrating a structure of a buoyancy controller according to the present invention.

### Mode for Invention

Hereinafter, an exemplary embodiment of the present invention will be described in detail with reference to the accompanying drawings. Meanwhile, a configuration or control method of an apparatus to be described below is only for illustrative purposes of the embodiment of the present invention and is not intended to limit the scope of the present invention. Throughout the drawings, the same reference numerals will refer to the same or like parts.

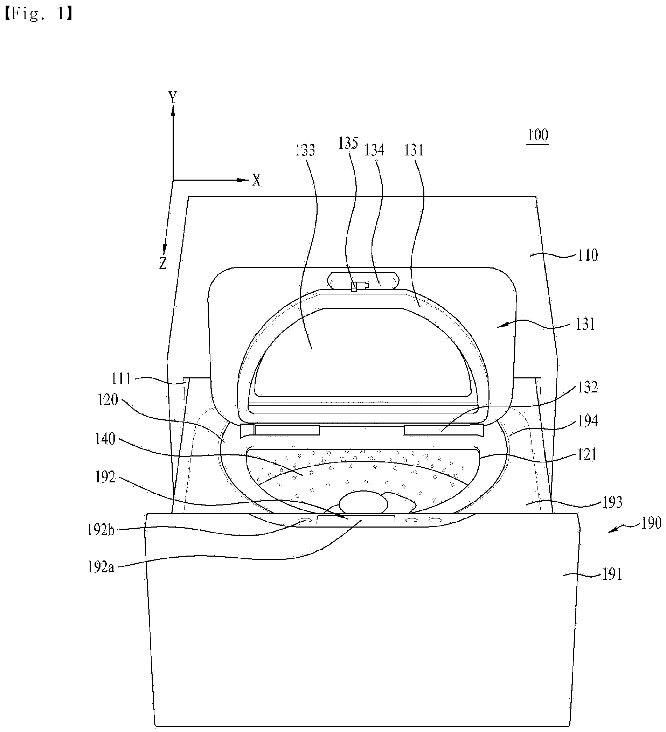

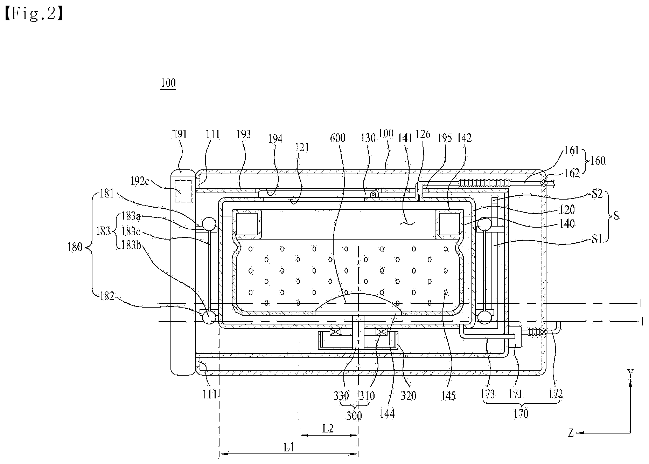

FIG. 1 is a view illustrating a basic configuration of an apparatus for treating clothes according to the present invention, and FIG. 2 is a sectional view illustrating an internal structure of the apparatus for treating clothes according to the present invention.

As illustrated FIGS. 1 and 2, the apparatus for treating clothes according to the embodiment of the present invention may be configured as a top-load type apparatus 100 for treating clothes. Here, the front-load type apparatus for treating clothes can be defined as a clothes treating apparatus configured such that an opening is provided at a front and a rotary shaft of a drum is parallel to the ground or has a predetermined slope, and a top-load type apparatus for treating clothes can be defined as a clothes treating apparatus configured such that an opening is provided at a top and a rotary shaft of a drum is perpendicular to the ground.

Referring to FIG. 1, the apparatus 100 for treating clothes according to the embodiment of the present invention may include a cabinet 110 defining an exterior, a tub 120 provided inside the cabinet 110 and configured to accommodate water, and a drum 140 rotatably provided inside the tub 120 to accommodate clothes.

Meanwhile, the tub 120 may include an access opening 121 formed at an upper portion or upper surface thereof and allowing loading and unloading of clothes, and the drum 140 may include a drum access opening 141 allowing loading and unloading of clothes in communication with the access opening 121.

The apparatus 100 for treating clothes according to the present invention may be used as an auxiliary clothes treating apparatus, and may be disposed on or under a main clothes treating apparatus. Therefore, each of the tub 120 and the drum 140 of the apparatus for treating clothes according to the present invention may be configured such that the height thereof is smaller than the width thereof in order to enhance the accessibility of the main clothes treating apparatus or the accessibility of the auxiliary clothes treating apparatus. That is, each of the tub 120 and the drum 140 may be configured to have a height smaller than the diameter thereof.

On the other hand, the apparatus 100 for treating clothes according to the present invention may be provided as a drawer-type so that a main clothes treating apparatus or another auxiliary clothes treating apparatus may be disposed thereon.

In this case, the apparatus 100 for treating clothes according to the present invention may include an opening 111 formed at a front of the cabinet 110, and may further include a drawer 190 provided inside the cabinet 110 to be drawn from or inserted into the cabinet through the opening 111.

The tub 120 may be provided in the drawer 190 and configured to move together with the drawer 190 when the drawer 190 is drawn or inserted.

The drawer 190 may include a front panel 191 configured to open and close the opening 111 of the cabinet 110, and a housing 193 attached to a rear portion of the front panel 191 to accommodate the tub 120.

The housing 193 may be provided in a hexahedral shape, and the housing 193 may include an opening 194 provided at an upper surface thereof, in communication with the access opening 121.

Meanwhile, the apparatus 100 for treating clothes according to the present invention may include a control panel 192 configured to receive a command for operating the apparatus for treating clothes according to the present invention for washing, rinsing, spin-drying, or the like of the apparatus for treating clothes, or display an operation state.

The control panel 192 may be provided at an upper portion of the front panel 191, or when the drawer 190 is not provided, may be provided at one side of the cabinet 110.

The control panel 192 may include a display part 192a for displaying the state of the apparatus for treating clothes, an input part 192b for receiving an operation command of the apparatus for treating clothes, and a controller 192c for controlling the operation of the apparatus for treating clothes.

The display part 192a may include a display panel such as an LCD or LED, or may include a speaker that generates sound to transmit information to a user. That is, the display part 192a may display information of the apparatus for treating clothes to the user, or may sound an alarm when there is notification.

Meanwhile, since the tub 120 of the apparatus 100 for treating clothes according to the present invention has a smaller height compared to the width thereof, water, there is a possibility that clothes, or detergent supplied to the tub 120 may be discharged to the access opening 121.

To prevent this, the apparatus 100 for treating clothes according to the present invention may further include a door 130 configured to open and close the access opening 121. The door 130 may be configured to be rotatably coupled to either one of the upper surface of the housing 193 and the upper surface of the tub 120 to open and close the access opening 121.

The door 130 may include a frame 131 provided corresponding to the shape of the access opening 121, a window 133 provided inside the frame 131 to check a state inside the tub 120, and a coupling portion 135 configured to fix the frame and the window when the frame and the window close the access opening 121.

The coupling portion 135 may have a handle 134 operable to enable the door to be opened easily.

Meanwhile, the door 130 may further include a door body 136 extending from an outer peripheral surface of the frame 131 to maximize the effect of closing the access opening 121.

Referring to FIG. 2, the apparatus 100 for treating clothes may include a water supply part 160 configured to supply water to the tub 120, and a drainage part 170 configured to drain water of the tub 120.

The water supply part 160 may include a water supply pipe 161 allowing water to be supplied from an external water supply source, and a water supply valve 162 configured to determine whether the water supply pipe 161 is opened or closed.

The drainage part 170 may include a drainage pipe 173 allowing water of the tub to be drained therethrough in communication with a lower portion of the tub 130, a drainage pump 171 for providing power to drain the water of the drainage pipe 173 to outside of the cabinet 110, and a discharge pipe 172 allowing water of the tub to be discharged to outside of the cabinet 110, in communication with the drainage pump 171.

Meanwhile, the apparatus 100 for treating clothes may include an attenuator 180 configured to support the tub 120 against the cabinet 110 or the drawer 190, and damp vibration generated in the tub 120 to prevent the vibration from being transmitted to the cabinet 110.

The attenuator 180 may be provided as a damper, a spring, and a combination of the damper and spring. Alternatively, a plurality of attenuators may be provided.

The attenuator 180 may be provided at either one of the upper and lower portions of the tub 120, and may be provided at both the upper and lower portions. However, since the apparatus 100 for treating clothes according to the present invention may be provided as an auxiliary clothes processing apparatus and thus have a limited height, the attenuator 180 is preferably provided on a side surface of the tub 120.

The attenuator 180 may include a first attenuating part 181 provided on an inner surface of the cabinet 110 or the drawer 190, a second attenuating part 182 provided on an outside of the tub 120, and a connecting part 183 for connecting the first attenuating part 181 and the second attenuating part 182 to each other.

The first attenuating part 181 may be provided at a location above the second attenuating part 182, and the connecting part 183 may have a first end coupled and fixed to the first attenuating part 181, and a second end supporting the second attenuating part 182. Thus, the tub 120 may be fixed and supported on the cabinet 110 or the drawer 190.

The first attenuating part 181 may be provided as a first bracket protruding from the cabinet 110 or the drawer 190, and the second attenuating part 182 may be provided as a second bracket protruding from the tub 120, and the connecting part 183 may be provided to connect the first bracket and the second bracket to each other. In this case, the connecting part 183 may be provided in parallel with the height of the drum 140 with respect to the ground or a bottom skirt 144 of the drum 140. This is to further expand the washing capacity of the tub 120 by minimizing the volume occupied by the attenuator 180 including the connecting part 183.

The connecting part 183 may include a first connecting part 183a seated in the first attenuating part 281 while passing therethrough, a second connecting part 183b supporting the second attenuating part 182 while passing therethrough, and a connecting bar 183c connecting the first connecting part 183a and the second connecting part 183b to each other.

Each of the first connecting part 183a and the second connecting part 183b may be configured such that the diameter thereof is larger than that of the connecting bar 183c, and may be provided in a disk shape, a hemispherical shape, or a spherical shape. Thus, the connecting part 183 may be stably coupled to the first attenuating part 181 and the second attenuating part 182.

Meanwhile, a water level sensor S for sensing the water level of the tub 120 may be provided at one side of the tub 120, and a temperature sensor for sensing the temperature of the tub 120 may be provided on an inner peripheral surface of the tub 120.

The water level sensor S may be comprised of a sensor tube S1 provided to extend toward the upper portion of the tub 120, in communication with one side of the tub 120, and a diode S2 provided on the sensor tube to sense the pressure inside the sensor tube. However, the water level sensor may be provided in any shape and structure as long as the sensor can measure the water level of the tub 120.

The water level sensor S may sense whether the water level of the tub 120 has reached a first water level I corresponding to the bottom skirt 144 of the drum, and sense whether the water level of the tub 120 has reached a second water level II corresponding to an agitator 600.

The first water level I may correspond to the water level between a bottom wall 127 of the tub and the bottom skirt 144 of the drum, and the second water level may correspond to the water level between bottom skirt 144 of the drum and the agitator 600. In detail, the second water level II may be defined as a water level at which the agitator 600 is exposed to air.

Meanwhile, the apparatus 100 for treating clothes may include a driving part 300 configured to rotate the drum 140 in the tub 120.

The driving part 300 may include a stator 310 fixed to the bottom wall 127 of the tub 120 and configured to generate a rotating magnetic field, a rotor 320 configured to be rotated by the rotating magnetic field of the stator, and a driving rotary shaft 330 configured to be rotated by the rotor while passing through the tub.

Meanwhile, the drum 140 may include a drum access opening 141 being in communication with the access opening 121, and a balancer 142 coupled to an outer peripheral surface of the drum access opening 141 and configured to prevent eccentricity of the drum 140.

Meanwhile, the drum 140 may include a plurality of perforations 145 formed in an inner circumferential surface thereof and allowing water of the tub 120 to flow in or out therethrough.

The drum 140 may be rotated by power provided by the driving part 300, and mechanical force may be applied to clothes accommodated in the drum 140 to wash the clothes.

Further, the drum 140 may be rotated by power provided by the driving part 300 to perform a spin-dry cycle for discharging moisture contained in the clothes through the perforations 145.

The bottom skirt 144 of the drum may include an opening 144a, and may further include the agitator 600 rotatably provided in the opening 144a.

The agitator 600 may be rotated independently of the rotation of the drum 140 to agitate clothes. That is, the agitator 600 may be configured to apply mechanical force to clothes accommodated in the drum 140 independently of the rotation of the drum 140 to wash the clothes, and repeat the rotation clockwise or counterclockwise in response to application of power from the driving part 300 thereby forming a strong water current inside the drum 140.

The agitator 600 is preferably rotated while water and clothes are accommodated in the tub 120. This is because when the agitator 600 is rotated while water is not accommodated in the tub 120, the clothes may be damaged due to direct contact with the agitator 600. Therefore, in a wash cycle for washing clothes through water and detergent, the agitator 600 may be rotated independently.

Further, the agitator 600 is preferably rotated in conjunction with the rotation of the drum 140 when water is not accommodated in the tub 120 or when the water level of the tub 120 is low. Therefore, in a spin-dry cycle for removing moisture from clothes by generating centrifugal force, the agitator 600 and the drum 140 may be rotated in the same direction.

Meanwhile, when a separate brake or clutch is provided to rotate the agitator 600 independently of the rotation of the drum 140 or in conjunction with the rotation of the drum 140 according to various situations, there occurs a disadvantage in that the height of the cabinet 110 may increase or the washing capacity of the tub 120 may decrease, due to the volume occupied by the brake or clutch.

Furthermore, a separate algorithm is required to actively control the brake or clutch, which also causes a problem that the load of the controller may increase more than necessary.

Therefore, it is necessary to be able to control the rotation of the agitator 600 and the drum 140 even in the absence of additional components such as clutches or brakes or components requiring separate control.

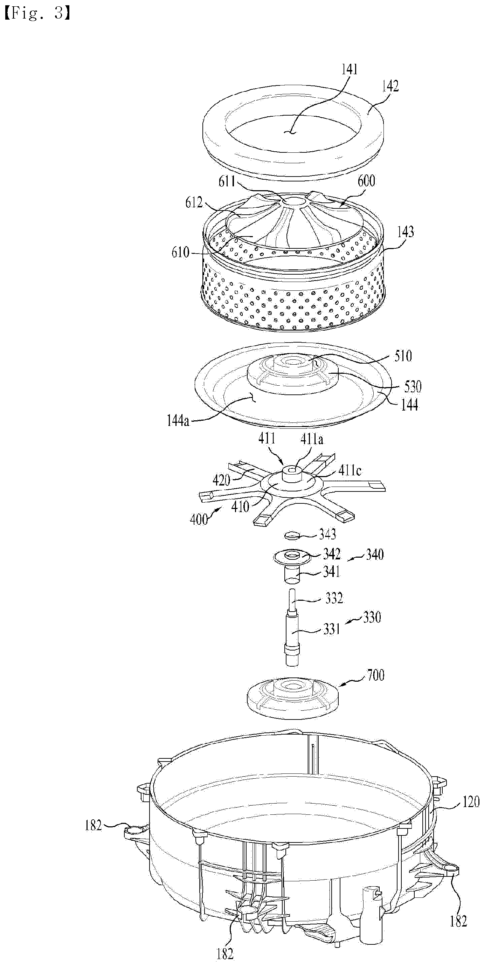

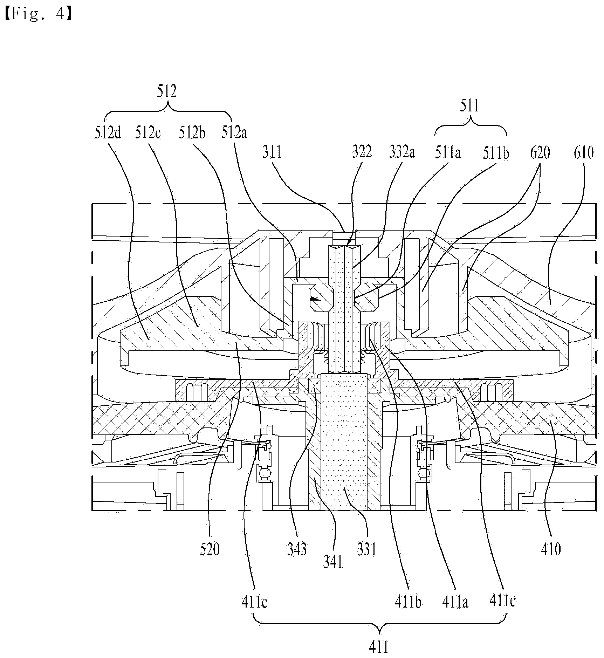

Hereinafter, referring to FIGS. 3 and 4, a description will be given of an embodiment of the apparatus 100 for treating clothes, wherein whether the agitator 600 and the drum 140 are rotated is automatically determined according to the change in the water level of the tub 120, which makes it possible to omit provision of the brake or clutch and to omit the algorithm for actively controlling the rotation of the agitator 600 and the drum 140.

The agitator 600 may include an agitator body 610 forming a main body, a central portion 611 provided at the center of the agitator body, and agitating arms 612 protruding radially from the central portion 611 and configured to agitate clothes.

The drum 140 may include a drum body 143 forming a main body, and the bottom skirt 144 coupled to a lower portion of the drum body 143 to form the bottom of the drum 140.

The drum body 143 may be provided in a cylindrical shape with open top and bottom, and the bottom skirt 144 of the drum may have the opening 144a described above in an inner peripheral surface thereof to define a space for allowing the rotation of the agitator 600.

The agitator 600 may be configured to be directly coupled to the rotary shaft 330 and rotated in conjunction with the rotation of the rotary shaft 330. In this case, if the drum 140 is directly coupled to the rotary shaft 330, it is impossible for the drum 140 to be rotated independently of the rotation of the agitator 600. Therefore, the drum 140 may be configured to be rotated indirectly relative to the rotary shaft 330 so as to be selectively rotated.

To this end, the rotary shaft 330 may include a shaft body 331 configured to be directly rotated by the rotor 320, and a shaft gear part 332 configured to be directly coupled to the agitator 600 to be rotated.

Meanwhile, the driving part 300 may further include a shaft receiver 340 rotatably receiving the shaft body 331 or the shaft gear part 332. In other words, the shaft receiver 340 may be configured to rotatably receive at least a portion of the rotating shaft 330 but not to be rotated in conjunction with the rotation of the rotary shaft 330. Therefore, the shaft receiver 340 may be provided in a cylindrical shape that may have a larger diameter than the rotary shaft 330.

Meanwhile, the shaft receiver 340 may be coupled to the bottom skirt of the drum 140 and configured to receive and support the rotary shaft 330.

The shaft receiver 340 may include a receiving pipe 341 rotatably receiving a portion of the rotary shaft 330, and an accommodation fixing portion 342 extending from an upper portion of the receiving pipe 341 to be coupled to a lower portion of the drum 140. Therefore, the rotary shaft 330 may be rotated independently of the shaft receiver 340 not to directly transmit power of the driving part 300 to the drum 140.

The apparatus 100 for treating clothes according to the present invention may include a coupling 500 provided between the agitator 600 and the driving part 300 or the bottom skirt 144 of the drum 140 and configured to be rotated in response to application of power from the driving part 300.

The coupling 500 may be coupled to the rotary shaft 330 and configured to be rotated in conjunction with the rotary shaft 330.

The coupling 500 may be configured to rotate only the agitator 600 when the water level of the tub 120 is equal to or greater than a predetermined water level, and rotate the agitator 600 and the drum 140 in the same direction when the water level of the tub 120 is equal to or less than a predetermined water level.

The coupling 500 may be made of a material having a smaller specific gravity than water. For example, the coupling 500 may be made of plastic, or may be made of engineering plastic or reinforced plastic for increasing rigidity. Therefore, when water is supplied to the tub 120, the coupling may be raised toward the agitator 600, and when water of the tub 120 is drained, the coupling may be lowered in a direction away from the agitator 600.

In general, the wash cycle for removing dirt by applying mechanical force to clothes may be performed when the water level of the tub 120 is equal to or greater than the second water level II, and the spin-dry cycle for removing moisture from clothes by rotating the drum 140 at a high speed may be performed at equal to or less than the second water level II or the first water level I.

Accordingly, the coupling 500 may be configured to rotate only the agitator 600 during the wash cycle, and rotate the agitator 600 and the drum 140 in the same direction during the spin-dry cycle. Depending on the water level of the tub 120, it may be determined whether to independently rotate the agitator 600.

Meanwhile, the apparatus 100 for treating clothes may further include a shaft holder 400 to which the shaft receiver 340 is coupled and coupled to the circumference of the opening 144a of the drum 140.

That is, the rotary shaft 330 may be configured to be rotated by the stator 310 and the rotor 320 but not to directly rotate the shaft holder 400 due to the shaft receiver 340.

In other words, the rotary shaft 330 may be configured to be freely rotated in the shaft receiver 340, and may pass through a hub 410 and a shaft through part 411 of the shaft holder 400. Further, the agitator 600 may be coupled to an end of the rotary shaft 330 to be rotated in conjunction with the rotation of the rotary shaft 330. While power generated by the driving part 300 may be directly transmitted to the agitator 600, the power generated by the driving part 300 may not be directly transmitted to the shaft holder 400.

The shaft holder 400 may be coupled to the circumference of the opening 144a of the drum 140. Therefore, the drum body 143 may be rotated when the shaft holder 400 is rotated, and the drum body 143 may be stopped rotation when the shaft holder 400 stops rotation.

In this case, the coupling 500 may be configured to be coupled to the shaft holder 400 to transmit the power of the driving part 300 to the drum 140 when the water level of the tub 120 is equal to or less than the second water level, and be separated from the shaft holder 400 to block transmission of the power to the drum 140 when the water level of the tub 120 is equal to or greater than a predetermined water level.

In detail, when the water level of the tub 120 is equal to or greater than the second water level, the coupling 500 may be separated from the shaft holder 400 and raised toward the agitator 600, and when the water level of the tub 120 is equal to or less than the second water level, the coupling may be lowered and coupled to the shaft holder 400. Since the coupling 500 may receive power directly from the driving part 300, the coupling may be coupled to the agitator 600 and rotate only the agitator 600 when the water level of the tub 120 is equal to or greater than the second water level, and the coupling may be coupled to the shaft holder 400 and rotate the shaft holder 400 when the water level of the tub 120 is equal to or less than the second water level.

The shaft holder 400 may include the hub 410 having a lower portion to which the shaft receiver 340 is coupled, and fixing arms 420 extending radially from the hub 410 to be coupled to the bottom skirt 144 of the drum.

The shaft holder 400 may further include the shaft through part 411 extending from an upper portion of the hub 410, receiving at least a portion of the shaft gear part 332, and provided at a predetermined distance apart from the shaft gear part 332.

The coupling 500 may include a power transmitting part 510 coupled to the rotary shaft 330 and configured to transmit power of the driving part 300. The power transmitting part 510 may include a coupling gear 511 coupled to the rotary shaft 330, configured to be rotated in conjunction with the rotary shaft 330, and having a gear provided on an outer circumferential surface thereof.

Further, the rotary shaft 330 may include a first gear 332a provided at a portion protruding upward from the hub 410 and coupled to an inner circumferential surface of the coupling gear 511.

Meanwhile, the shaft through part 411 may include a hub gear 411a receiving at least a portion of the shaft gear part 332, provided at a predetermined distance apart from the shaft gear part 332, and having a second gear 411b provided on an inner circumferential surface thereof.

The coupling gear 511 may have an inner circumferential surface provided with a third gear 511a that is configured to be meshed with the first gear 332a and moved along the longitudinal direction of the shaft gear part 332, and an outer circumferential surface provided with a fourth gear 511b that is configured to be meshed with the second gear 411b when inserted between the shaft gear part 332 and the hub gear 411a.

The coupling gear 511 may be raised upward along the longitudinal direction of the shaft gear part 332 when water is drawn into the tub 120, and the coupling gear may be lowered downward along the longitudinal direction of the shaft gear part 332 and fitted over the shaft gear part 332 and the hub gear 411a when water of the tub 120 is drained.

That is, the coupling gear 511 may directly receive power of the rotary shaft 330 since the third gear 511 is meshed with the first gear 332a of the shaft gear part 332.

Therefore, when water is supplied to the tub 120 and the water level of the tub 120 reaches equal to or greater than a predetermined water level, with the coupling gear 511 inserted between the shaft gear part 332 and the hub gear 441a, the coupling gear is escaped from the shaft gear part 332 and the hub gear 441a and raised.

Therefore, even when the shaft gear part 332 is rotated, the hub gear 441a is not rotated, and also the shaft fixing portion 400 and the drum 140 are not rotated. In this case, when the coupling gear 511 comes into contact with a lower portion of the agitator 600, the coupling 500 may rotate the agitator 600 even if the agitator 600 is coupled so as not to be rotated directly by the rotary shaft 330. If the agitator 600 is fixed to a top end of the shaft gear part 332, the agitator 600 may be continuously rotated in conjunction with the rotation of the rotary shaft 330.

Therefore, in the wash cycle, the drum 140 may be fixed while only the agitator 600 may be rotated, resulting that a water current may be formed inside the drum 140, thereby improving washing efficiency.

Further, when water of the tub 120 is drained and the water level of the tub 120 thereby reaches equal to or less than the second water level, the coupling gear 511 may be fitted over the shaft gear part 332 and the hub gear 441a.

In this case, since the fourth gear 551b of the coupling gear is meshed with the second gear 411b of the hub gear, when the coupling 500 is rotated by the shaft gear part 332, the hub gear 411a may be rotated.

Thus, the coupling gear 511 may transmit power generated from the driving part 300 to the shaft holder 400 through the hub gear 411a, and rotate the drum 140. In this case, since the agitator 600 may be rotated in conjunction with the shaft gear part 332, the agitator 600 and the drum 140 may be rotated in conjunction with each other.

Therefore, in the spin-dry cycle, the agitator 600 and the drum 140 may be rotated integrally, resulting that the degree of entanglement of the clothes may be reduced.

Meanwhile, the coupling 500 may further include a moving part 512 capable of moving the coupling gear 511. The moving part 512 may include a moving plate 512a extending from an upper portion of the coupling gear 511 and to which the coupling gear is fixed, and a moving rib 512b extending from an end of the moving plate 512a so as to detachably receive the hub gear 411a.

That is, the moving rib 512b and the moving plate 512a may define a space therebelow to receive the hub gear 411a. The space may allow introduction of water thereto, and thus the coupling 500 may be floated when water is supplied to the tub 120.

Meanwhile, the moving part 512 may further include an extension rib 512c extending from the moving rib 512b, and an agitator coupling portion 512d protruding from an end of the extension rib and detachably coupled to the lower portion of the agitator 600.

The agitator coupling portion 512d and the extension rib 512c may define a space therebelow to come into contact with water or allow introduction of water thereto so that the coupling 500 can float in water more easily.

Meanwhile, the agitator 600 may protrude upward to detachably receive the coupling 500 in a lower portion of the central portion 611. The agitator may further include a coupling rib 620 extending downward from the central portion 611 and seated on the extension rib 512c to receive the coupling gear 511.

This may increase contact force of the agitator 600 with the coupling 500. Unlike the above, the agitator 600 may not be fixed to the rotary shaft 330 but coupled to the rotary shaft 330 to be rotated freely thereabout. In this case, when the coupling 500 is rotated, the agitator 600 may be rotated in conjunction with the rotation of the coupling, in contact with the coupling gear 511, the agitator coupling portion 512d, and the extension rib 512c of the coupling 500.

Meanwhile, the shaft receiver 340 may further include a receiving bearing 343 provided on an inner circumferential surface of the receiving pipe 341 and configured to block transmission of power of the rotary shaft 330 to the shaft receiver 340 and at the same time induce the free rotation of the rotary shaft 330.

Meanwhile, the shaft through part 411 may further include a hub coupling portion 411c provided separately from the hub 410 to be detachably coupled to the hub 410, and extending from an outer peripheral surface of the hub gear 411a and coupled to the hub 410.

This is to provide ease when it is difficult to integrally mold or manufacture the hub 410 with the shaft through part 411 due to the complicated shape of the hub 410.

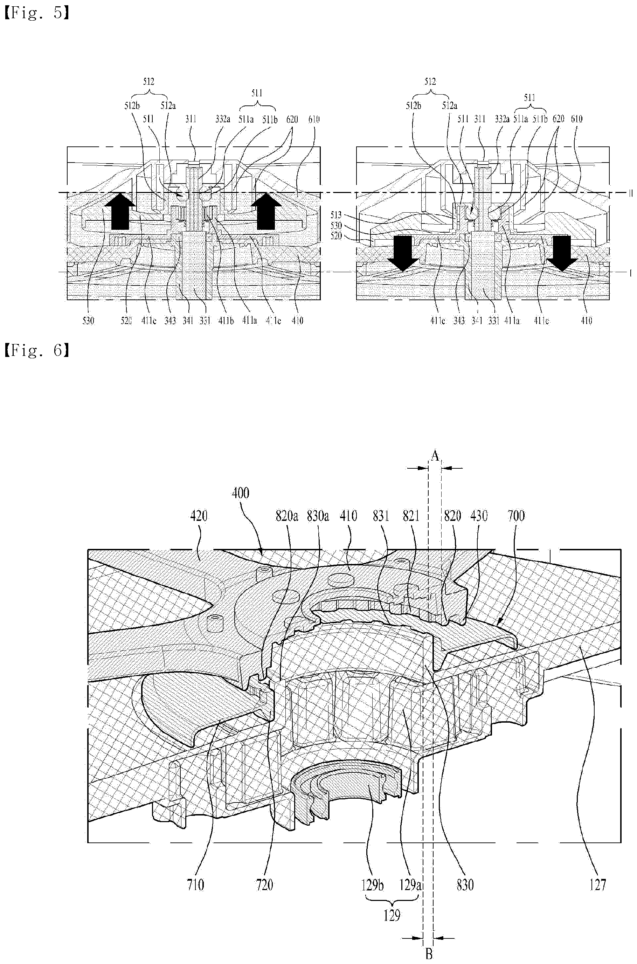

FIG. 5 illustrates position changes of the coupling 500 according to the water level of the tub 120.

Referring to FIG. 5(a), when water is supplied to the tub 120 and the water level thereby reaches equal to or greater than the second water level, water is drawn into a lower portion of the coupling 500, and the coupling 500 is raised thereby. In this case, the coupling 500 may be raised until an upper portion of the coupling 500 comes into contact the lower portion of the central portion 610 of the agitator.

The coupling 500 may be rotated by the shaft gear part 332 and thus rotate the agitator 600. However, the coupling 500 is in a state of being escaped from the hub gear 411a and thus may not rotate the shaft holder 400.

Thus, when the water level of the tub 120 reaches equal to or greater than the second water level, only the agitator 600 may be rotated. In this case, when the wash cycle starts, a water current may be formed inside the drum 140 and cause the clothes to collide with the drum with an appropriate strength thereby increasing washing efficiency.

Referring to FIG. 5(b), when the water level of the tub 120 reaches equal to or less than a predetermined water level, water is discharged from the lower portion of the coupling 500 and the coupling 500 is lowered thereby. In this case, the power transmitting part 510 of the coupling 500 is lowered until inserted between the hub gear 411a and the shaft gear part 332.

When the coupling 500 is rotated by the rotation of the shaft gear part 332, the coupling 500 may also rotate the hub gear 411a.

Further, if the agitator coupling portion 512d of the coupling 500 protrudes sufficiently and the coupling rib 620 of the agitator 600 comes into contact an upper surface of the coupling 500, the coupling 500 may also rotate the agitator 600.

Furthermore, if the central portion 611 of the agitator 600 is fixed to the top end of the shaft gear part 332, the agitator 600 may be rotated in conjunction with the rotation of the shaft gear part 332.

In this case, the shaft gear part 332, the coupling gear 511, and the hub gear 411a may be rotated at the same angular speed.

Therefore, the shaft holder 400 and the agitator 600 may be rotated simultaneously, thereby obtaining an effect similar to integrally rotating the shaft holder and the agitator.

If the spin-dry cycle is being performed, the drum 140 and the agitator 600 may be rotated integrally simultaneously, and thus the entanglement of clothes may be alleviated to prevent damage to the clothes.

Meanwhile, even if only the agitator 600 is rotated when the water level of the tub reaches the second water level II due to the coupling 500 and the shaft holder 400, the drum 140 may be rotated due to inertia that causes the agitator 600 to be rotated or a water current formed by the agitator 600.

In other words, the drum 140 may be rotated unintentionally in the same direction as the agitator 600 due to the rotation of the agitator 600, or may be rotated in the opposite direction to the agitator 600 due to collision with the clothes.

When the drum 140 is rotated unintentionally, washing performance that can be expected from the agitator 600 may be significantly deteriorated, and the entanglement of clothes may be increased due to formation of an abnormal water current.

To prevent this, the apparatus 100 for treating clothes according to the present invention may require a configuration that fixes the drum 140 when the agitator 600 is rotated to wash clothes, and allows the rotation of the drum 140 when the clothes are spin-dried.

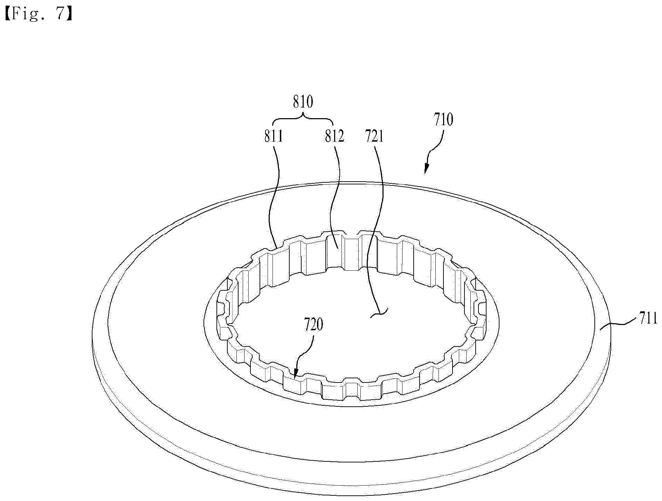

FIG. 6 illustrates an embodiment in which a float 700 of the apparatus 100 for treating clothes according to the present invention is installed, and FIG. 7 illustrates an embodiment of the float 700.

The apparatus 100 for treating clothes according to the present invention may include the float 700 provided between the bottom skirt 144 of the drum and the tub 120, and configured to be attached to the drum 140 to prevent the rotation of the drum when the water level of the tub 120 reaches equal to or greater than the first water level I, and separated from the drum 140 to allow the rotation of the drum 40 when the water level of the tub 120 reaches equal to or less than the first water level I.

The float 700 may be configured, when water is supplied to the tub 120 and the water level of the tub 120 thereby reaches equal to or greater than the first water level I, to be raised by buoyancy and causes the bottom skirt 140 of the drum and the bottom wall 127 of the tub 120 to be coupled or connected to each other to fix the drum 140, and, when water of the tub 120 is drained and the water level of the tub 120 thereby reaches equal to or less than the first water level I, to be lowered by buoyancy and separated from the drum 140 to release the coupling or connection of the drum 140 and the tub 120.

The float 700 may fix the drum 140 to prevent the rotation of the drum 140 when the float is raised and coupled to the bottom skirt 140 of the drum, and thus, the rotation of the drum 140 may be prevented even if the agitator 600 is rotated while being coupled to the end of the rotary shaft 330.

In another aspect, since while the drum 140 is configured so as not to receive power from the rotating shaft 330 by the shaft receiver 340, the agitator 600 is rotated while being coupled to the end of the rotary shaft 330 or in contact with the coupling 500, the agitator 600 may be rotated independently even if the float 700 is attached to the drum 140.

In this case, since the water level of the tub 120 at which washing is allowed is equal to or greater than the first water level I, the drum 140 may be fixed by the float 700 when the agitator 600 is rotated in the wash cycle or the like.

Since the bottom skirt 144 of the drum 140 has the shaft holder 400 coupled thereto, the float 700 may be configured to be attached to the shaft holder 400 when the water level of the tub 120 reaches equal to or greater than the first water level, and separated from the shaft holder 400 when the water level of the tub 120 reaches equal to or less than the first water level. That is, since the shaft holder 400 is configured to be rotated in conjunction with the drum 140, the float 700 may fix or release the drum 140 by being coupled to or coming into contact with the shaft holder 400.

The float 700 may be made of a material having a smaller specific gravity than water so as to be raised by buoyancy, and may be made of the same material as the coupling 500 described above. Further, since the float 700 is configured to fix the drum 140 by being attached to or coming into contact with the drum 140 so that the drum 140 is not rotated, the float may be made of an elastic material to enhance durability and adhesion.

The float 700 may include a floating body 710 configured to be raised by buoyancy along the longitudinal direction of the rotary shaft 330, and a locking body 720 provided on an inner circumferential surface of the floating body 710, through which the shaft receiver 340 passes, and configured to be attachable to a lower portion of the shaft holder 400.

That is, the float 700 may include the floating body 710 raised in response to buoyancy applied when the water level of the tub 120 rises, and the locking body 720 provided through the floating body 710, forming a space for allowing insertion of the shaft receiver 340, and being attachable to the lower portion of the shaft holder 400.

The locking body 720 may be provided in a ring shape protruding from an upper surface of the floating body 710 and configured to be attached to or come into contact with the shaft holder 400 before the floating body 710. However, the present invention is not limited thereto, and the floating body 710 may also be configured to be attached to the shaft holder 400. The locking body 720 may further include a receiving hole 721 provided therein to allow the rotary shaft 330 to pass therethrough.

The floating body 710 may be provided in a flat disk shape, but is not limited thereto. For example, the floating body may be provided in a disk shape with a bent surface 711 that has an outer circumferential surface bent downward. The bent surface 711 of the floating body 710 may be configured to receive a predetermined volume of water so that the floating body 710 can be easily raised or lowered by buoyancy, and allow the buoyancy to constantly act on the floating body 710 thereby preventing the floating body 710 from being tilted.

Meanwhile, since the fixing arms 420 of the shaft fixing portion 400 are coupled to the bottom skirt 144 of the drum, and since the hub 410 includes the shaft through part 411 and the shaft receiver 340 is coupled to the hub, the locking body 720 may be configured to be attached to, coupled to, or come into contact with the hub 410 to fix the hub 410 thereby preventing the rotation of the hub 410.

Meanwhile, even if the float 700 is attached to the bottom skirt of the drum 140 or the hub 410, a force for rotating the drum 140 may be generated due to various reasons, such as the rotation of the agitator 600 being relatively strong, an instant collision with clothes, and a strong water current. In this case, if the float 700 is in simple surface contact with the bottom skirt of the drum 140 or the hub 410, friction force with the hub 410 and the like may be relatively small, resulting in a phenomenon where the drum 140 is rotated. To prevent this, the apparatus 100 for treating clothes according to the present invention may further include a rotation prevention part 800 capable of preventing arbitrary rotation of the float 700.

The rotation prevention part 800 may be provided on at least one of the float 700, the hub 410, and the bottom wall 127 of the tub 120 to prevent the rotation of the float 700.

Referring to FIGS. 6 and 7, the rotation prevention part 800 according to the present invention may include a plurality of ridges and grooves 810 provided along the circumference of the locking body 710, and a coupling part 820 protruding from a lower portion of the hub 410 so as to have a diameter or shape corresponding to the ridges and grooves 810 and configured to come into contact with either one of outer and inner circumferential surfaces of the ridges and grooves 810.

The ridges and grooves 810 may be formed in a shape in which a pattern in which the circumference of the locking body 720 is grooved or ridged inward or outward is repeatedly formed. The ridges and grooves 810 may be formed flat in the height direction so that the locking body 720 can be easily moved upward or downward, and may be entirely formed from top to bottom of the locking body 720.

The ridges and grooves 810 may include at least one of a first ridges and grooves 811 arranged on the outer circumferential surface of the locking body 720 and a second ridges and grooves 812 arranged on the inner circumferential surface of the locking body 720.

Although FIGS. 6 and 7 illustrate that the ridges and grooves 810 include both the first ridges and grooves 811 and the second ridges and grooves 812, the ridges and grooves 810 may include only one of the first ridges and grooves 811 and the second ridges and grooves 812.

When the ridges and grooves 810 include the first ridges and grooves 811, the coupling part 820 may protrude from a lower surface of the hub 410 in a ring shape that comes into contact with the outer circumferential surface of the locking body 720 so as to come into surface contact with the first ridges and grooves 811. In this case, the coupling part 820 may include a coupling ridges and grooves 821 corresponding to the ridges and grooves so as to come into entire contact with the first ridges and grooves 811.

Meanwhile, when the ridges and grooves 810 include the second ridges and grooves 812, the coupling part 820 may protrude from the lower surface of the hub 410 in a ring shape that comes into contact with the inner circumferential surface of the locking body 720 so as to come into surface contact with the second ridges and grooves 812.

Thus, when the float 700 is raised and attached to the lower surface of the hub 410, the upper surface of the locking body 720 may come into surface contact with the coupling part 820, and the ridges and grooves 810 and the coupling ridges and grooves 821 may be engaged with each other. Therefore, even if rotational force is applied to the drum 140, the float 700 may be prevented from rotating by the ridges and grooves 810 and the coupling ridges and grooves 821.

Meanwhile, when the float 700 is not fixed even if the float 700 is raised and the ridges and grooves 810 are engaged with the coupling part 820 thereby, the rotation of the float 700 may not be completely prevented. Further, when the float 700 is lowered and rotate even if the ridges and grooves 810 are in contact with the coupling part 820, the position of the ridges and grooves 810 and the position of the coupling ridges and grooves 821 may become staggered with each other, and the raising of the float 700 may be restricted thereby.

To prevent this, the rotation prevention part 800 may further include a seat part 830 provided at the bottom wall 127 of the tub 120, protruding so as to have a diameter or shape corresponding to the ridges and grooves 810, and configured to come into contact with either one of the outer and inner circumferential surfaces of the ridges and grooves 810.

Meanwhile, the tub 120 may include a mounting part 129 provided at the bottom wall 127 and to which the driving part 300 is mounted. The mounting part 129 may include a stator mounting part 129a to which the stator 310 is mounted, and at least one bearing part 129b rotatably supporting the rotary shaft 330. Therefore, the seat part 830 is a part where the mounting part 129 is thicker than the bottom wall 127 of the tub and the rotary shaft 330 passes through, and thus may be configured to protrude above the mounting part 129.

The seat part 830 may further include a seat ridges and grooves 831 provided in a ring shape that protrudes from the bottom wall of the tub 120, and configured to come into contact with either one of the first ridges and grooves 811 or the second ridges and grooves 812. Further, the seat ridges and grooves 831 may be the same pattern as the pattern of the coupling ridges and grooves 821 so that the locking body 720 escaped from the coupling part 820 is fully seated.

Meanwhile, both the coupling part 820 and the seat part 830 may be configured to come into contact with the inner circumferential surface of the locking body 720, or the outer circumferential surface of the locking body 720.

However, the coupling part 820 may be configured to come into contact with either one of the outer circumferential surface and the inner circumferential surface of the locking body 720, and the seat part 830 may be configured to come into contact with the remaining one of the outer circumferential surface and the inner circumferential surface of the locking body 720. In detail, the coupling part 820 may be configured to come into contact with either one of the first ridges and grooves 811 which form the outer circumferential surface of the ridges and grooves 810, and the second ridges and grooves 812 form the inner circumferential surface of the ridges and grooves. The seat part 830 may be configured to come into contact with the remaining one of the first ridges and grooves 811 which form the outer circumferential surface of the ridges and grooves 810, and the second ridges and grooves 812 which form the inner circumferential surface of the ridges and grooves. This is to prevent the locking body 720 from moving or tilting in the horizontal direction by always fixing the inner and outer circumferential surfaces of the locking body 720.

For example, as illustrated, the coupling part 820 may be configured to come into contact with the first ridges and grooves 811, and the seat part 830 may be configured to come into contact with the second ridges and grooves 812. That is, the coupling part 820 may be configured to have a larger diameter than the seat part 830.

In this case, a gap A between the seat part 830 and the coupling part 820 may be configured to correspond to a thickness B of the locking body 720 so that the raising of the locking body 720 can be prevented from being restricted, and the tilting or horizontal movement of the locking body 720 can be prevented. Further, a lower end 820a of the coupling part 820 may be configured to extend downward further than an upper end 830a of the seat part 830. That is, the coupling part 820 and the seat part 830 may be configured to have sections overlapping each other with respect to a horizontal plane. Alternatively, as illustrated, the lower end 820a of the coupling part 820 may be configured to have the same height as the upper end 830a of the seat part 830.

Thus, the ridges and grooves 810 may be configured to immediately come into contact with the coupling part 820 when water is supplied to the tub 120 and the ridges and grooves are thereby spaced from the seat part 830, and immediately come into contact with the seat part 830 when water of the tub 120 is drained and the ridges and grooves are thereby spaced from the coupling part 820.

Meanwhile, the shaft holder 400 may further include a restriction part 430 provided at the lower portion thereof and configured to prevent excessive raising of the float 700. The restriction part 430 may be configured to protrude from the lower portion of the hub 410. The restriction part 430 may prevent the float 700 from being excessively raised and damaged or deformed.

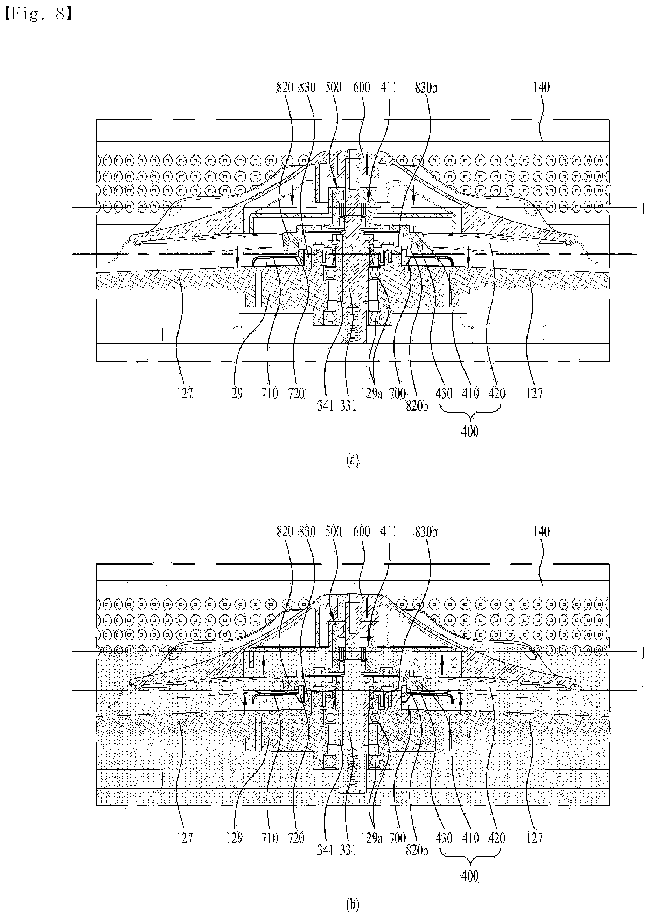

Hereinafter, the operation of the float 700 of the apparatus 100 for treating clothes according to the present invention will be described with reference to FIG. 8.

FIG. 8(a) illustrates a state in which water is not supplied to the tub 120 or water of the tub 120 is completely drained. In this case, the coupling 500 is seated on the hub 410 by its own weight, and the float 700 is also seated on the bottom wall 127 of the tub by its own weight.

The coupling gear 511 of the coupling 500 is received in and coupled to the shaft through part 411 to become a state capable of transmitting power to rotate the drum 140, and the float 700 is seated over the seat part 830 to become a state that does not restrict the rotation of the drum 140.

Referring to FIG. 8(b), when water of the tub 120 starts to be supplied and reaches the first water level I, the float 700 may be raise by buoyancy.

When the float 700 is raised and starts to come into contact with the shaft holder 400, the locking body 720 starts to be fitted to the coupling part 820. When the water of the tub 120 is supplied to reach equal to or greater than the first water level I, the ridges and grooves 810 provided in the locking body 720 come into contact with the coupling part 820 and the locking body 720 is thereby attached or fixed to the coupling part 820. In this case, the upper surface of the floating body 710 may also come into contact with the lower surface of the hub 410.

Meanwhile, since a lower surface of the locking body 720 is still in contact with the seat part 830, the locking body 720 serves to connect the coupling part 820 and the seat part 830 to each other. Accordingly, the drum 140 is fixed to the tub 120 so as to be prevented from rotating relative to the tub 120.

When water is further supplied to the tub 120 and reaches the second water level II, the coupling 500 is raised by buoyancy and thereby separated from the shaft through part 411. Therefore, the coupling 500 does not provide power to rotate the drum 140 since the coupling does not rotate the shaft through part 411 even if rotated by the rotary shaft 330.

As a result, only the agitator 600 is rotated, while the drum 140 is fixed to the tub 120 by the float 700 and thus is not rotated.

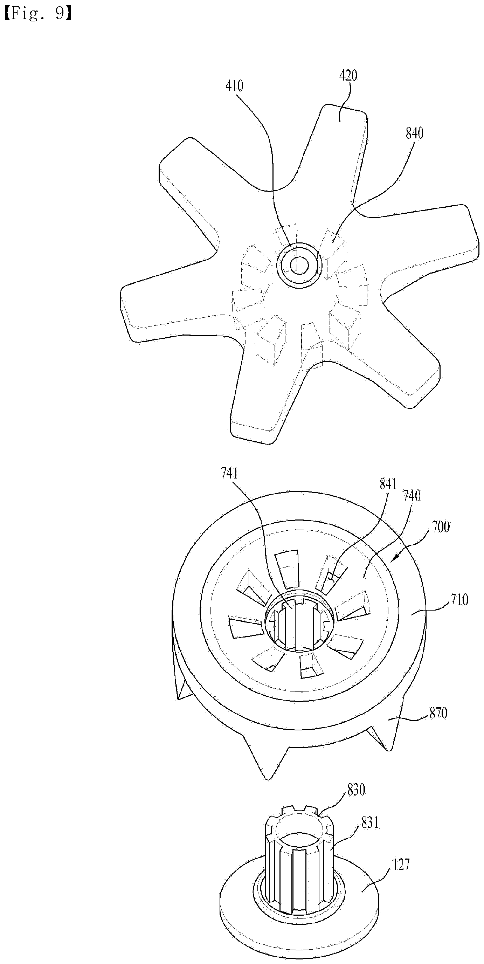

FIG. 9 illustrates another embodiment of an float 700 and a rotation prevention part 800 of the apparatus for treating clothes according to the present invention, and for ease of understanding, the shaft holder 400, the float 700, and the bottom wall 127 of the tub 120 located at a position of the mounting part 129 are schematically illustrated.

The rotation prevention part 800 according to the present invention may include at least one protrusion 840 protruding from either one of the float 700 and the lower surface of the hub 410, and an insertion hole 841 formed at the remaining one of the float 700 and the lower surface of the hub 410 to allow the at least one protrusion to be inserted thereinto.

The float 700 may further include a floating body 710 configured to be raised by buoyancy along the longitudinal direction of the rotary shaft 330, and a contact body 740 provided inside the floating body 710, through which the rotary shaft 330 passes, and configured to come into contact with the shaft holder.

The contact body 740 may be provided in a shape corresponding to the lower surface of the hub 410, and may be configured to come into surface contact with the hub 410.

The contact body 740 may include a plurality of contact female splines 741 provided along an inner circumferential surface thereof, and the seat part 830 may include seat male splines 831 provided in a shape corresponding to the contact female splines 741 and configured to come into surface contact with the contact female splines 741.

The seat part 830 may receive the rotary shaft 330 so that the rotary shaft 330 can be rotated freely therein. The seat part 830 may extend from the bottom wall 127 of the tub toward the hub 410 so that the contact body 740 is raised and come into contact with the lower surface of the hub 410. The gap between a free end of the seat part 830 and a lower end of the hub 410 may be smaller than the thickness of the contact body 740. This is to prevent the contact body 740 from being separated from the seat part 830 when the contact body is raised by the floating body 710.

FIG. 9 illustrates that the protrusion 841 protrudes from the lower surface of the hub 410, and the insertion hole 841 is formed through the contact body 740.

A plurality of protrusions 840 may be provided radially around the hub 410 to be spaced apart from each other at a regular interval, and the insertion hole 841 may be formed in a shape corresponding to the shape of each of the protrusions 840 so that the protrusion 840 inserted therein can be prevented from being separated.

Therefore, when the float 700 is raised, the respective insertion holes 841 and the protrusions 840 may be engaged with each other to prevent the float 700 from rotating arbitrarily, and when the float 700 is lowered, the insertion holes 841 may be disengaged and spaced from the protrusions 840 but the float 700 may be prevented from rotating arbitrarily by the seat part 830 and the contact female splines 741.

If the insertion holes 841 are not formed, the protrusions 840 may prevent the contact body 740 from rotating by concentrating contact force on the contact body 740.

Meanwhile, the rotation prevention part 800 may include a contact part 870 protruding from a lower portion of the floating body 710 and configured to come into contact with the bottom wall 127 of the tub.

The contact part 870 may come into contact with the bottom wall 127 of the tub when the float 700 is lowered, thereby preventing the float 700 from tilting and preventing the float 700 from rotating to prevent the engagement position of the insertion holes 841 and the protrusions 840 from being changed.

In this case, the rotation prevention part 800 may include all or at least one of the at least one protrusion 840 protruding from either one of the float and the lower surface of the hub, the insertion hole 841 formed at the remaining one of the float and the lower surface of the hub to allow the at least one protrusion to be inserted thereinto, and the contact part 870 protruding from the lower portion of the float and configured to come into contact with the bottom wall of the tub.

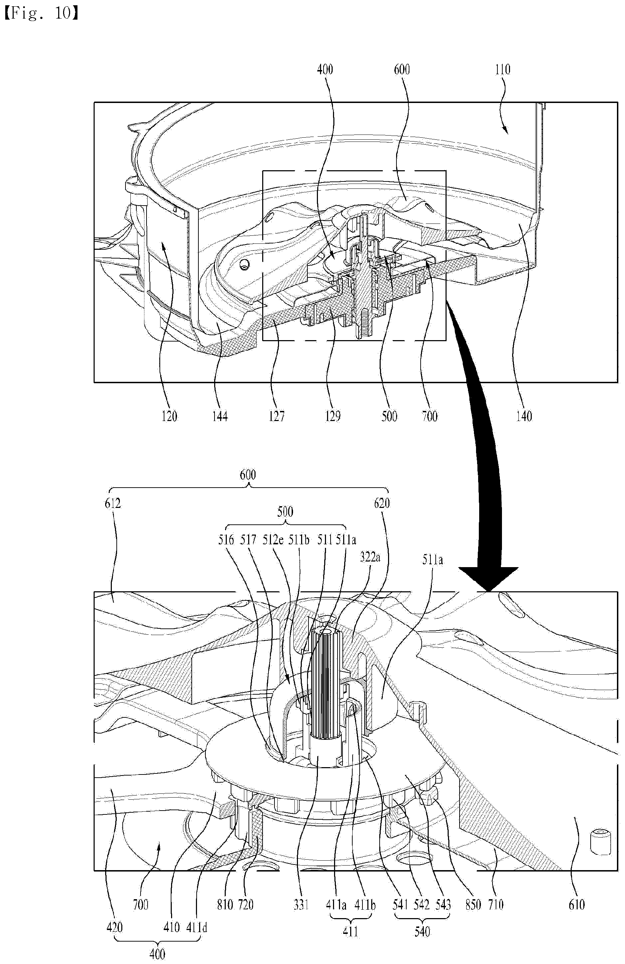

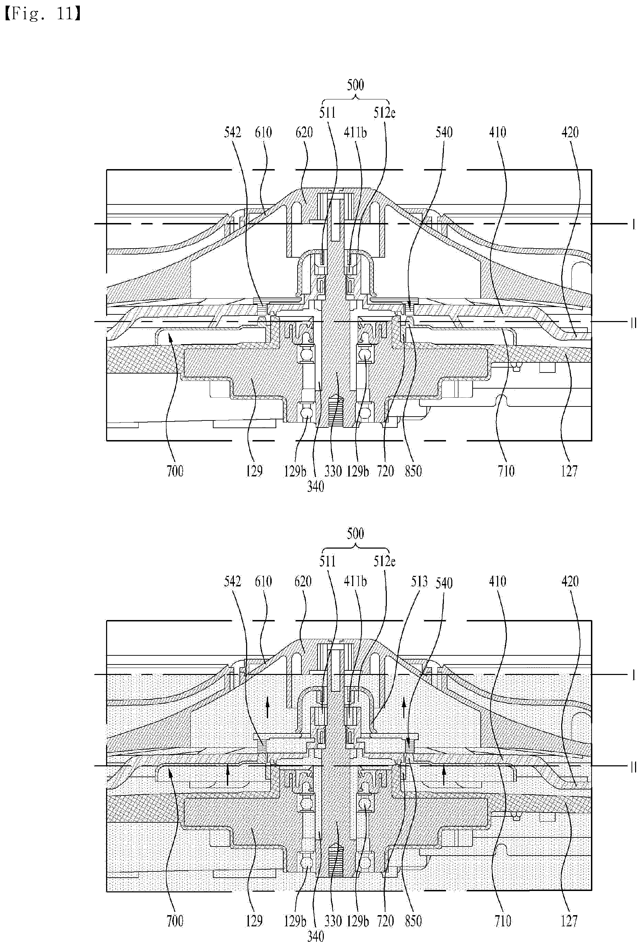

FIGS. 10 and 11 illustrate another embodiment of a coupling and a float of the apparatus 100 for treating clothes according to the present invention.

As illustrated FIG. 4, if the moving part 512 of the coupling 500 includes the moving plate 512a, the moving rib 512b as well as a housing rib 514, the volume occupied by the coupling 500 may be significant.

Therefore, the volume occupied by the coupling 500 may increase as the volume occupied by the coupling 500 increases since the agitator 600 has to receive the coupling 500. Further, when the size of the tub 120 is relatively small, or when there is a need to increase the volume of the tub 120, it may not be preferable to increase the volume of the agitator 600. Therefore, in order to secure the degree of freedom for the volume of the agitator 600, it is preferable that the volume of the coupling 500 is as small as possible.

However, as the volume of the coupling 500 decreases, the area or volume in which buoyancy caused by water will act may decrease, and thereby the raising of the coupling 500 may not be easily performed.

Therefore, the coupling 500 needs to be configured to generate sufficient buoyancy while having a small volume.

To this end, the coupling 500 of the apparatus 100 for treating clothes according to the present invention may further include a floating disk 540 provided below the moving part 512, and configured to be raised in conjunction with the raising of the float 700 to raise the moving part 512.

The floating disk 540 may be provided on the hub 410 and configured to be pushed upward by the float 700 when the float 700 is raised. Thus, the floating disk 540 may push the coupling 500 upward.

Therefore, since the coupling 500 is configured to be raised or lowered by physical contact with the floating disk 540, rather than by buoyancy, the coupling may be allowed to have a small volume.

As a result, the moving part 512 of the coupling 500 may include a moving cup 512e extending from an upper surface or an outer circumferential surface of the coupling gear 511 to receive the coupling gear 511 and the shaft through part 411. The moving cup 512e may correspond to a configuration in which the moving plate 512a and the moving rib 512b are connected to each other, and may correspond to a volume occupied by the moving plate 512a and the moving rib 512b.

Meanwhile, since the shaft gear part 332 has to be coupled to the agitator 600, the moving cup 512e may have an upper surface having a through portion. That is, the upper surface of the moving cup 512e may have the through portion formed in a shape corresponding to the diameter of the shaft gear part 332.

The third gear 511 a of the coupling gear 511 may be meshed with the first gear 332a of the shaft gear part 332.

The floating disk 540 may be formed in a plate or disk shape having a larger diameter than the moving cup 512e so that the moving cup 512e can be easily raised and appropriate buoyancy can be applied, while the floating disk is raised by the float 700. In this case, in order to reduce the volume of the entire coupling 500, the floating disk 540 is preferably provided in a structure that does not have a separate volume other than its own thickness.

Meanwhile, the floating disk 540 may be integrally provided with the moving cup 512e, but is not limited thereto. The floating disk 540 and the moving cup 512e may be provided as separate members so that the fourth gear 511b of the coupling gear 511 provided inside the moving cup 512e and the second gear 411b of the shaft through part 411 can be easily meshed with each other.

The floating disk 540 is preferably provided symmetrically with respect to the rotary shaft 330 since floating disk has to be configured to push or support the moving cup 512e in the same force and direction. Accordingly, the floating disk 540 may include an interference prevention hole 541 through which the rotary shaft 330 passes.

Meanwhile, to prevent tilting or tipping over of the moving cup 512e at the top of the floating disk 540, the moving cup 512e may further include a seat ring 516 seated on an upper surface of the interference prevention hole 541, and a seat rib 517 provided under the seat ring 516 and configured to come into contact with an inner circumferential surface of the interference prevention hole 541.

This may increase contact force or coupling force between the moving cup 512e and the floating disk 540.

Meanwhile, the floating disk 540 may include at least one support part 542 having a larger diameter than the moving part 512, provided at a lower portion thereof, and configured to come into contact with the float 700. The support part 542 may be provided in a protrusion shape protruding from a lower surface of the floating disk 540. The shaft holder 400 may further include a support part through-hole 411d provided through the hub 410, and allowing the support part 542 to be inserted thereinto or released therefrom. The float 700 may further include a pressing part 850 inserted into the support part through-hole 411d and configured to press the support part 542.

The pressing part 850 may be provided in a protrusion shape that protrudes at a position corresponding to the support part 542 from an upper portion of the locking body 720 or an upper portion of the floating body 710. Since the pressing part 850 is inserted into the support part through-hole 411d, the pressing part may also serve as the rotation prevention part 800 that can prevent the float 700 from rotating.

FIG. 11 illustrates an aspect in which the coupling 500 and the float 700 are adjusted in position according to a water level.

FIG. 8(a) may correspond to a state in which water is not supplied to the tub 120 or water of the tub 120 is completely drained. The moving cup 512e becomes a state in which the coupling gear 511 is seated on the shaft through part 411 by its own weight and the coupling gear 511 is thereby meshed with the second gear 411b. In this case, when the rotary shaft 330 is rotated and the shaft gear part 332 is rotated thereby, the coupling gear 511 rotates the shaft through part 411 to transmit power to the drum 140.

Meanwhile, the float 700 is also seated on the bottom wall 127 of the tub by its own weight, and the floating disk 540 is also seated on the hub 410 by its own weight. The support part 542 is inserted into the support part through-hole 411d, and the pressing part 850 is escaped from the support part through-hole 411d. Therefore, the drum 140 may be disposed in a rotatable state without being fixed to the tub 120, and the spin-dry cycle or the like may be performed.

Meanwhile, when water is supplied to the tub 120 to the first water level I, the float 700 is raised and attached to the hub 410. In this case, the pressing part 850 of the float 700 is inserted into the support part through-hole 411d to press the support part 542 of the floating disk 540. As a result, the floating disk 540 is raised and pushes upward the moving cup 512e, and the coupling gear 511 is separated from the shaft through part 411. Accordingly, since the fourth gear 511a of the coupling gear 511 and the second gear 411b of the shaft through part 411 are separated from each other, power of the rotary shaft 330 is not transmitted to the shaft through part 411, but only the agitator 600 is rotated.

Meanwhile, when water is supplied to the tub 120 to the second water level II, the same process as above is performed. However, in this case, even if water is supplied to the first water level I, the coupling 500 may also be raised due to the raising of the float 700. Therefore, the float 700 and the coupling 500 may be simultaneously raised, and thus malfunctions and the like can be prevented.

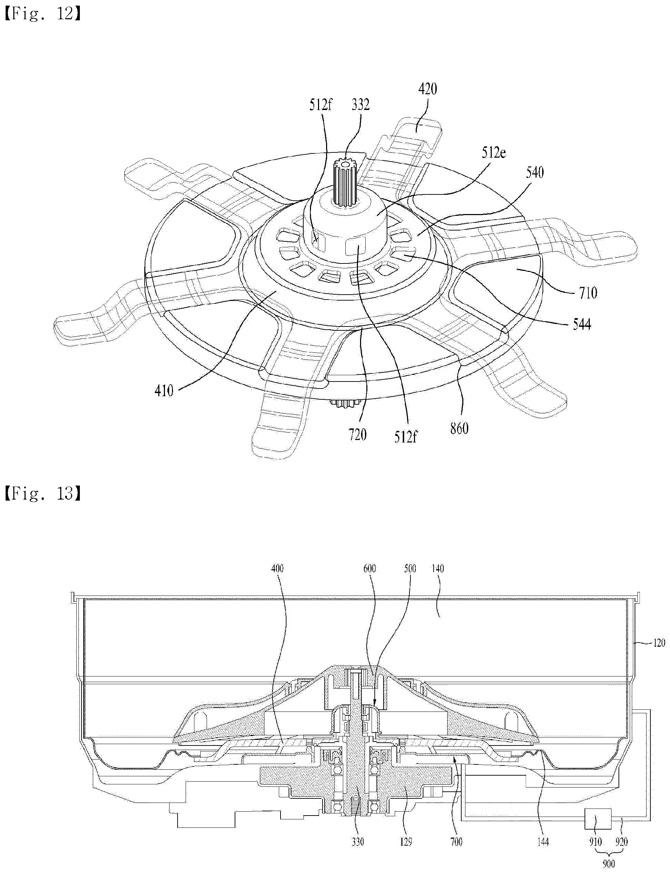

FIG. 12 illustrates an embodiment in which the volume or weight of the float 700, the moving cup 512e, and the floating disk 540 can be reduced.

The rotation prevention part 800 may further include a hub seat 860 provided as a groove in the upper portion of the floating body 710 so that at least one of the hub 410 and each of the fixing arms 420 is seated on the floating body 710.

By having the hub seat 860 formed corresponding to the fixing arm 420 and the hub 410, the floating body 710 may be prevented from arbitrary rotating, and the height of the floating body may be reduced by the depth at which the hub 410 or the fixing arm 420 is seated thereby securing a volume.

Meanwhile, the floating disk 540 may include a plurality of through-holes 544 formed through one surface thereof to reduce weight since the floating disk does not need to receive buoyancy due to the float 700.

Further, the moving cup 512e may include a through portion 512f formed through one surface thereof since the moving cup also does not need to receive buoyancy.

This may reduce the weights of the floating disk 540 and the moving cup 512e to facilitate the raising thereof.

FIG. 13 illustrates a buoyancy controller of the apparatus 100 for treating clothes according the present invention, wherein the buoyancy controller is configured such that when the amount of water supplied to the tub 120 is small, or when water supplied to the tub 120 is not sufficient to smoothly raise the float 700, this situation is corrected.

The buoyancy controller 900 may be configured to move water or air of the tub 120 toward below the float 700, in communication with one side of the tub 120 and the bottom wall 127 of the tub.

The buoyancy controller 900 may include a buoyancy pump 910 absorbing water and air inside the tub 120 to provide power to move the water and air toward below the float 700, and a buoyancy pipe 920 being communication with one side of the tub 120 and the bottom wall 127 of the tub and connected to the buoyancy pump 910 to move the water and air.

The buoyancy controller 900 may serve to control the float 700, but is not limited thereto. For example, the buoyancy controller may control the height of the float 700 to control whether to rotate the drum 140 and the agitator 600 even when water of the tub 120 is supplied to equal to or less than the first water level I.

The buoyancy pump 910 may be installed in the lower portion of the tub 120 within the height occupied by the driving part 300 in order not to increase the volume of the apparatus for treating clothes.

Meanwhile, although not illustrated, the buoyancy controller 900 may further include a clamp configured to move the float 700 by means of physical force under the control of the controller 192C.

It should be understood that the exemplary embodiment of the present invention is not limited to the above-described embodiment, and the present invention may be embodied in various forms without departing from the scope of the present invention. Therefore, if modifications include the components of the claims of the present invention, such modifications should be regarded as belonging to the scope of the present invention.

## Claims

1. An apparatus for treating clothes, the apparatus comprising:
a cabinet defining an exterior;
a tub provided inside the cabinet, having an upper portion with an access opening, and configured to accommodate water;
a drum rotatably provided inside the tub, having a bottom skirt with an opening, and configured to accommodate clothes;
an agitator rotatably provided in the opening of the bottom skirt and configured to agitate the clothes;
a driving part provided below the agitator and configured to provide power to rotate at least one of the agitator and the drum; and
a float provided between the bottom skirt of the drum and the tub, and configured to be attached to the drum to prevent rotation of the drum when a water level of the tub is equal to or greater than a first water level, and separated from the drum to allow the drum to be rotatable when the water level of the tub is equal to or less than the first water level.

2. The apparatus of claim 1, wherein the driving part comprises:
a stator fixed to the tub and configured to form a rotating magnetic field;
a rotor configured to be rotated by the rotating magnetic field;
a rotary shaft passing through the tub and configured to be rotated by the rotor; and
a shaft receiver rotatably receiving at least a portion of the rotary shaft and coupled to the bottom skirt of the drum,
wherein the agitator is coupled to an end of the rotary shaft so that the agitator is rotated in conjunction with rotation of the rotary shaft even when the float is attached to the drum.

3. The apparatus of claim 2, wherein the drum comprises a shaft holder coupled to an inner circumferential surface of the opening of the bottom skirt and to which the shaft receiver is coupled to a lower portion thereof; and
the float is configured to be attached to the shaft holder when the water level of the tub is equal to or greater than the first water level, and separated from the shaft holder when the water level of the tub is equal to or less than the first water level.

4. The apparatus of claim 3, wherein the float comprises:
a floating body configured to be raised by buoyancy along a longitudinal direction of the rotary shaft; and
a locking body provided on an inner circumferential surface of the floating body, through which the shaft receiver passes, and configured to be attachable to the lower portion of the shaft holder.

5. The apparatus of claim 4, wherein the shaft holder comprises:
a hub to which the shaft receiver is coupled; and
fixing arms extending radially from the hub and coupled to the bottom skirt of the drum,
wherein the locking body is configured to come into contact with the hub.

6. The apparatus of claim 5, further comprising:
a rotation prevention part provided on at least one of the agitator, the hub, and a bottom wall of the tub and configured to prevent rotation of the agitator.

7. The apparatus of claim 6, wherein the rotation prevention part comprises:
a plurality of ridges and grooves provided along a circumference of the locking body; and
a coupling part protruding from a lower portion of the hub so as to have a diameter or shape corresponding to the ridges and grooves and configured to come into contact with either one of outer and inner circumferential surfaces of the ridges and grooves.

8. The apparatus of claim 7, wherein the rotation prevention part further comprises a seat part provided on the bottom wall of the tub to protrude corresponding to the ridges and grooves, and configured to come into contact with either one of the outer and inner circumferential surfaces of the ridges and grooves.

9. The apparatus of claim 8, wherein the coupling part is configured to come into contact with either one of the outer and inner circumferential surfaces of the ridges and grooves, and
the seat part is configured to come into contact with a remaining one of the outer and inner circumferential surfaces of the ridges and grooves.

10. The apparatus of claim 9, wherein the ridges and grooves are configured to immediately come into contact with the coupling part when the ridges and grooves are spaced apart from the seat part, and immediately come into contact with the seat part when the ridges and grooves are spaced apart from the coupling part.

11. The apparatus of claim 7, wherein the rotation prevention part comprises:
at least one of at least one protrusion protruding from either one of the float and the lower surface of the hub;
an insertion hole formed at a remaining one of the float and the lower surface of the hub to allow the at least one protrusion to be inserted thereinto; and
a contact part protruding from a lower portion of the float and configured to come into contact with the bottom wall of the tub.

12. The apparatus of claim 5, further comprising:
a coupling provided between the agitator and the driving part, and configured to be coupled to the shaft holder to transmit power to the drum when the water level of the tub is equal to or less than a second water level, and separated from the shaft holder to block transmission of the power to the drum when the water level of the tub is equal to or greater than the second water level.

13. The apparatus of claim 12, wherein the rotary shaft comprises:
a shaft body connected to the rotor; and
a shaft gear part extending from the shaft body and having a first gear provided on an outer circumferential surface of a portion that protrudes from the hub,
wherein the shaft holder further comprises a shaft through part extending from an upper portion of the hub, receiving at least a portion of the shaft gear part, provided at a predetermined distance apart from the shaft gear part, and having a second gear provided on an inner circumferential surface thereof; and
the coupling comprises:
a coupling gear having an inner circumferential surface provided with a third gear that is configured to be meshed with the first gear and moved along the longitudinal direction of the shaft gear part, and an outer circumferential surface provided with a fourth gear that is configured to be meshed with the second gear when inserted between the shaft gear part and the hub gear; and
a moving part extending from an upper surface or outer circumferential surface of the coupling gear so that the hub gear is detachably received therein, and configured to raise the coupling gear.

14. The apparatus of claim 13, wherein the coupling further comprises a floating disk provided below the moving part, and configured to be raised in conjunction with raising of the float to raise the moving part.

15. The apparatus of claim 14, wherein the floating disk comprises at least one support part having a larger diameter than the moving part, provided at a lower portion thereof, and configured to come into contact with the float;
the shaft holder further comprises a support part through-hole provided through the hub and allowing the support part to be inserted thereinto; and
the float further comprises a pressing part inserted into the support part through-hole and configured to press the support part.

16. The apparatus of claim 1, further comprising:
a buoyancy controller configured to move water or air of the tub toward below the float, in communication with one side of the tub and the bottom wall of the tub.
